Europäisches Patentamt

European Patent Office

Office européen des brevets

(19)

(11) **EP 1 070 234 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(51) Int Cl.$^7$: **G01J 3/04**

(21) Anmeldenummer: **99920591.7**

(22) Anmeldetag: **26.03.1999**

(86) Internationale Anmeldenummer:
**PCT/EP99/02293**

(87) Internationale Veröffentlichungsnummer:
**WO 99/51952 (14.10.1999 Gazette 1999/41)**

(54) **ANORDNUNG ZUR ERHÖHUNG DER SPEKTRALEN ORTSAUFLÖSUNG EINES SPEKTROMETERS**

ARRANGEMENT FOR INCREASING LOCAL SPECTRAL RESOLUTION IN A SPECTROMETER

CONFIGURATION DESTINEE A AUGMENTER LA RESOLUTION SPECTRALE LOCALE D'UN SPECTROMETRE

(84) Benannte Vertragsstaaten:
**FR GB IT**

(30) Priorität: **06.04.1998 DE 19815080**

(43) Veröffentlichungstag der Anmeldung:
**24.01.2001 Patentblatt 2001/04**

(73) Patentinhaber:
- **INSTITUT FÜR PHYSIKALISCHE HOCHTECHNOLOGIE E.V.**
  **07745 Jena (DE)**
- **Analytik Jena GmbH,**
  **Analysenmessgeräte und Laboreinrichtungen**
  **07745 Jena (DE)**

(72) Erfinder:
- **KRAUSS, Manfred**
  **D-07751 Jena (DE)**

- **QUILLFELDT, Winfried**
  **D-07751 Jena (DE)**
- **RIESENBERG, Rainer**
  **D-07749 Jena (DE)**
- **SEIFERT, Thomas**
  **D-07743 Jena (DE)**

(74) Vertreter: **Pfeiffer, Rolf-Gerd, Dipl.-Phys.**
**Patentanwälte Pfeiffer & Partner**
**Winzerlaer Strasse 10**
**07745 Jena (DE)**

(56) Entgegenhaltungen:
EP-A- 0 565 069          DE-A- 3 133 828
DE-A- 4 017 317          DE-C- 19 504 834

**Beschreibung**

Die Erfindung betrifft eine Anordnung zur Erhöhung der spektralen Ortsauflösung von Spektrometern der Emissions- oder Absorptions-Spektralanalyse, die für den Empfänger Empfängerarrays einsetzen.

Aus dem Stand der Technik sind vielfältige Spektrometer bekannt. So wird in DE 40 17 317 A1 ein Fotodioden-Array-Spektrometer beschrieben, bei dem durch eine mechanische Verschiebung der einzelnen optisch wirksamen Elemente eines Polychromators eine Erhöhung der spektralen Auflösung erreicht werden soll. Die entsprechenden optischen Elemente sind ein Eintrittsspalt, ein dispergierendes Gitter und eine Photodiodenzeile. Jedes dieser Elemente kann durch einen mechanischen Antrieb und dazu gehörende Mittel zur Erzeugung von Verlagerungssignalen bewegt werden.

In DE 35 44 512 C2 wird versucht, das Auflösungsvermögen durch eine möglichst gute Anpassung der Fokalkurve eines Spektrometers mit abbildendem Konkavgitter mittels weiterer optischer Bauelemente (Spiegel) zu erhöhen. Die Wirkung beruht darauf, daß das erzeugte Spektrum weitgehend geebnet und damit an den ebenen Fotodioden-Array-Empfänger möglichst gut angepaßt wird. Die spektrale Auflösung kann damit nicht wesentlich verbessert werden; bestenfalls erreicht man eine Auflösung, die der doppelten diskreten Pixelbreite entspricht.

Wie bei den beiden genannten Schriften für spektroskopische Zwecke, so wird auch für Bildverarbeitung mit einer Verschiebung des Bildes gegen den Empfänger gearbeitet.

In EP 65 885 A1 wird das Bild periodisch gegenüber dem Array-Empfänger bewegt. Aus mehreren geringfügig gegeneinander versetzten Bildern wird ein Bild mit höherem Auflösungsvermögen gewonnen.

In den Schriften EP 131 387 A1 und EP 65 885 A1 wird das Auflösungsvermögen durch eine Schwingungsbewegung des Array-Empfängers gegenüber dem Bildentstehungsort verbessert.

Es ist in der Spektroskopie bekannt, mittels mehrerer zueinander paralleler Eintrittsspalte Spektren zu erzeugen.

In DE 31 33 828 A1 wird eine Anordnung beschrieben, bei der ein erstes verschiebbares Spaltelement mit mehreren Spalten gegen ein zweites bewegliches Spaltelement verschoben wird. Zweck der Anordnung ist es, den Eintrittsspalt definiert zu verstellen, um eine hohe Einstellgenauigkeit der Breite mit geringem Aufwand zu erhalten. Ein Bezug auf die Dimensionen des Empfängers spielt in dieser Schrift keine Rolle.

In DE 34 06 645 A1 werden durch mehrere räumlich feststehende Eintrittsspalte in Verbindung mit Lichtleitfasern und einer Unterbrecheranordnung, die jeweils nur einen Eintrittsspalt wirksam werden läßt, Spektren erzeugt, die bezüglich der Wellenlänge gegeneinander versetzt sind. Diese parallele Anordnung von mehreren Eintrittsspalten erfordert keinen Spaltabstand, der in irgendeiner Weise mit dem spektralen Auflösungsvermögen in Beziehung steht. Der Abstand wird aus rein mechanischen Gründen so gewählt, daß die Lichtleiter in parallelen Reihen angeordnet werden können. Da der Ursprung der einzelnen Spektren verschiedenen Proben entspricht, ist es auch nicht vorgesehen, mehrere Spektren elektronisch so miteinander zu verarbeiten, daß ein höheres spektrales Auflösungsvermögen erreicht wird.

In US-PS 4,259,014 werden ebenfalls mehrere räumlich feststehende Eintrittsspalte zur Erzeugung mehrerer gegeneinander verschobener Spektren angewendet. Dabei ist es das Ziel, ein langes eindimensionales Spektralband in mehrere Teilspektren zu zerlegen, die auf einem zweidimensionalen Array-Empfänger, der in beiden Dimensionen eine wesentlich geringere Ausdehnung hat als das genannte eindimensionale Spektralband, übereinander liegen. Die Lage der Eintrittsspalte wird nur nach dem Gesichtspunkt der möglichst guten Ausfüllung des Array-Empfängers gewählt. Eine Verarbeitung der Teilspektren miteinander zum Zweck der Erhöhung der Auflösung ist hier nicht Gegenstand der Erfindung und wäre mit dieser Lösung auch nicht möglich.

In DE 39 39 148 A1 wird ebenfalls mit räumlich feststehenden Eintrittsspalten gearbeitet, die so angeordnet sind, daß die 1. und die -1. Spektralordnung eines Spektrometers auf ein und demselben Array-Empfänger abgebildet werden. Dabei liegen die Spektren räumlich weit auseinander und es gibt wie bei DE 34 06 645 A1 und US-PS 4,259,014 keinen Zusammenhang zwischen den Spaltbreiten bzw. Spaltabständen zu den mechanischen Array-Parametern. In US-PS 5,513,031 ist eine Anordnung beschrieben, bei der die spektrale Auflösung eines Photodiodenspektrometers dadurch verbessert werden soll, daß nacheinander n Spektren mit n unterschiedlich positionierten Spektrometer-Eintrittsspalten aufgenommen werden, bei denen die Mitte aufeinanderfolgender Spalte um einen Betrag d/n versetzt ist, wobei d die Breite der Pixel der Photodiodenzeile ist. Bei dieser Lösung ist die relativ große, nicht zu unterschreitende Bauform und der erforderliche große Verstellweg nachteilig. Da der Träger der n Spalte in dieser Anordnung bewegt werden muß, ist die Möglichkeit von Positionierfehlem erhöht.

Als nachteilig bei den Anordnungen, die die Verbesserung der spektralen Auflösung zum Ziel haben, ist anzusehen, daß ganze optisch wirksame Baugruppen wie Eintrittsspaltgruppe, Gittergruppe oder Empfängergruppe feinfühlig im Bereich weniger μm mit einer Reproduzierbarkeit im Bereich weniger μm bewegt werden müssen. Das ist besonders dann kritisch, wenn die hohe Temperaturkonstanz kompakter Spektrometer (vgl. DE 32 11 868 AI, DE 195 04 834 A1) durch die Mittel zur Verlagerung des Spektrums nicht beeinträchtigt werden soll.

Die Erwärmung eines Spektrometers, besonders eines kompakten Spektrometers führt zu einer Längenausdehnung des Spektrometerkörpers und des Empfängers. In DE 195 04 834 wird eine Anordnung beschrieben, bei der die thermische Ausdehnung des Gehäuses, des Gitters und des Empfängers aufeinander abgestimmt sind.

Der Erfindung liegt die Aufgabe zugrunde, eine Anordnung zur Erhöhung der spektralen Ortsauflösung eines Spektrometers anzugeben, die den Aufbau eines kompakten Spektrometers ermöglicht, bei dem relativ preiswerte Empfängerarrays zum Einsatz gelangen können und mit denen spektrale Informationen aufgelöst werden können, deren laterale Ausdehnung unterhalb der Pixelbreite eines Empfängerelementes liegen. Weiterhin soll mit der Anordnung eine Verschiebung des abgebildeten Spektrums relativ zu den Pixeln des optoelektronischen Empfängers bei Temperaturveränderung im Spektrometer unterbunden sein.

Die Aufgabe wird durch die Merkmale des ersten Patentanspruchs gelöst. Vorteilhafte Ausgestaltungen sind durch die nachgeordneten Ansprüche erfaßt.

Das Wesen der Erfindung besteht darin, daß eine Auflösungserhöhung eines Spektrometers durch eine spezielle Beleuchtungsspalteinheit erreicht wird, die eine definiert schaltbare und feststehende Spaltblende mit mehreren parallelen Spalten beinhaltet, deren Anordnung in enger Korrelation zu einem zeilenförmigen Empfängerarray erfolgt, wobei alle optisch wirksamen Baugruppen des Spektrometers fest und unbeweglich angeordnet sind. Das Auf- und Zuschalten der einzelnen Spalte erfolgt mit Mitteln, deren Positioniergenauigkeit deutlich niedrigeren Anforderungen unterliegt als die Ortsauflösung der Spektren auf dem Empfängerarray. Insbesondere können Informationen aufgelöst werden, die eine kleinere laterale Ausdehnung als die Breite des detektierenden Elementes besitzen. Eine Verschiebung des Spektrums relativ zu den Pixeln des optoelektronischen Empfängers wird unterbunden durch eine angepaßte Materialauswahl für die zum Einsatz gelangende Spaltzeile in Anpassung an die übrigen Baugruppen des Spektrometers.

Für die Erfindung ist der Füllfaktor der einzelnen Empfängerelemente des Zeilenempfängers nicht von Bedeutung, das heißt, daß es die vorgeschlagene Anordnung auch gestattet, die Auflösung von Zeilenempfängern mit Toträumen zwischen den Empfängerelementen zu verbessern.

Durch eine definierte, fest vorgegebene Zuordnung der Spalte zum Spaltbild auf dem Empfängerarray und der definierten Anordnung der einzelnen Spalte innerhalb des Spaltarrays, können Intensitätsanteile bezbgen auf Bruchteile einer Pixelbreite ermittelt werden.

Die Erfindung soll nachstehend anhand eines schematischen Ausführungsbeispiele näher erläutert werden. Es zeigen:

Fig. 1     die erfindungsgemäße Anordnung mit ihren wesentlichen Baugruppen und deren Zuordnung zueinander,

Fig. 2     eine Ausbildung der erfindungsgemäßen Beleuchtungsspalteinheit mit einer ersten und zweiten Spaltblende und

Fig. 3     beispielhaft die Lage der durch die Spalte nach Fig. 2 erzeugten Spektren auf einem Zeilenempfänger.

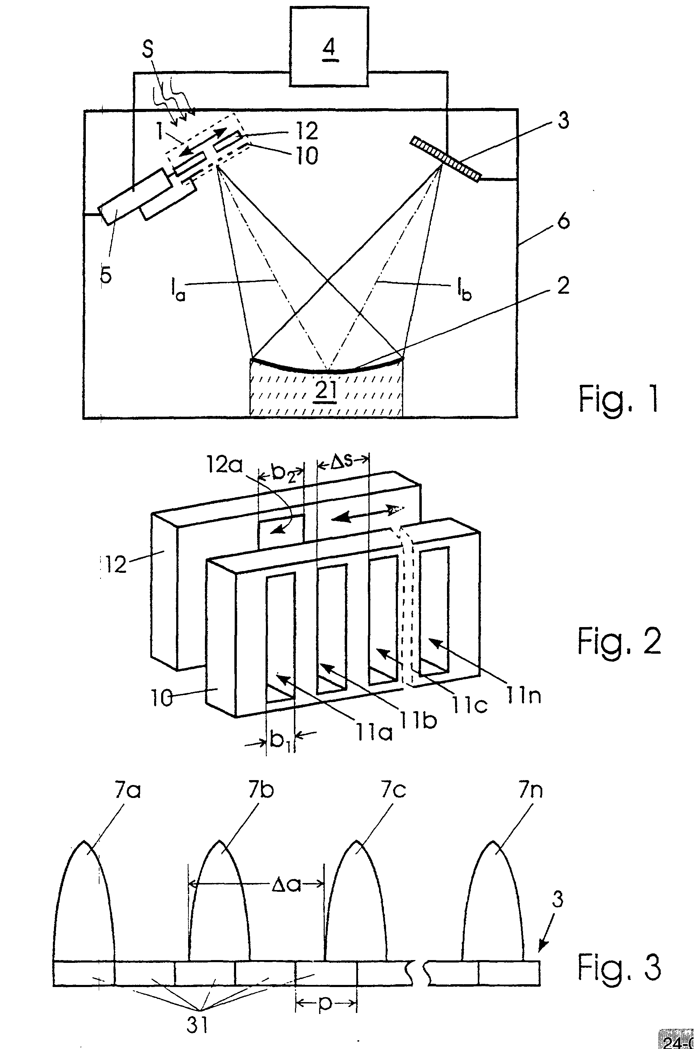

In Figur 1 ist die Anordnung mit ihren wesentlichen Baugruppen und deren Zuordnung zueinander schematisch dargestellt. Sie besteht aus einer strichliniert umfaßten Beleuchtungsspalteinheit 1, einem dispergierenden Gitter 2 und einem Empfängerarray 3. Die Beleuchtungsspalteinheit 1 beinhaltet dabei eine erste Spaltblende 10 mit mehreren definiert angeordneten Spalten 11a bis 11n, wobei $n \geq 2$ ist, die über das abbildende dispergierende Gitter 2 auf das Empfängerarray 3, das im Beispiel ein Zeilenempfänger ist, abgebildet werden. Das Gitter hat sowohl die Aufgabe der Abbildung der Eingangsspalte auf den Zeilenempfäger als auch der spektralen Zerlegung des Lichts. Die Spaltblende 10, das Gitter 2 und das Empfängerarray 3 sind dabei zueinander und zum Spektrometergehäuse 6 in eine starre Verbindung gebracht, wie es durch nicht näher bezeichnete Stege an der Spaltblende 10 und dem Empfängerarray 3 und dem Gitterträger 21 in Fig. 1 angedeutet ist. Der fest angeordneten Spaltblende 10 ist eine zweite Spaltblende 12 zugeordnet, die in der dargestellten Pfeilrichtung vermittels einer translatorischen Verschiebeeinheit 5 verstellbar ist. Diese Verschiebeeinheit 5 kann, aufgrund der speziellen Ausgestaltung der ersten und zweiten Spaltblende 10, 12, auf die nachstehend detaillierter eingegangen wird, äußerst einfach ausgebildet sein und z.B. aus einen Schrittmotor mit angeschlossenem Getriebe bestehen. Weiterhin ist eine eine Stell- und Signalverarbeitungseinheit 4 vorgesehen, vermittels derer die jeweiligen Schaltzustände der zweiten Spaltblende 12 einstellbar und die zugehörigen Spektren vom Empfangerarray 3 abgreifbar sind.

Figur 2 sind die erste und zweite Spaltblende 10, 12 detaillierter dargestellt. Die verschiebbare Spaltblende 12 ist mit nur einem Spalt 12a versehen, dessen Breite $b_2$ größer festgelegt ist, als die Breite $b_1$ der Spalte 11a bis 11n der ersten feststehenden Spaltblende. Dadurch ist die exakte Positionierung der zweiten Spaltblende 12 in der Art, daß sie jeweils nur einen Spalt 11 der ersten Blende 10 in Durchlaßrichtung für die spektral zu untersuchende Strahlung S versetzt, relativ unkritisch, weshalb genannte Verschiebeeinheit 5 vergleichsweise einfach und damit preiswert ausgeführt werden kann. Durch Verstellen der zweiten Spaltblende 12 sind nacheinander die Spalte 11a...n im Strahlengang öffenbar, wobei jeweils nur ein Spalt geöffnet ist und die übrigen verschlossen sind. Im Rahmen der Erfindung ist die Spaltbreite $b_1$ in der Weise bestimmt, daß ihre Abbildung auf dem Empfängerarray 3 in der Größenordnung der Pixelbreite p eines einzelnen Empfängerelementes 31 erfolgt und jeweils benachbarte Spalte zueinander in einem Mittenabstand $\Delta s$ angeordnet sind, der einer Beziehung

$$\Delta s = [(m \cdot P) \pm (p/n)] \cdot (I_b/I_a)$$

folgt, wobei m für eine ganze Zahl $\geq$ 1, p für die Pixelbreite eines Empfängerelementes 31, $I_b$ für die empfängerseitige Schnittweite und $I_a$ für die spaltseitige Schnittweite stehen. Bei einem Abbildungsmaßstab von 1:1 im Spektrometer vereinfacht sich genannte Beziehung zur Festlegung der Spaltbeabstandungen zu: $\Delta s$ = (m · p) ± (p/n). Die Bilder der Eintrittsspalte erscheinen in diesem Fall in einem Abstand $\Delta a = \Delta s$, bei einem anderen Abbildungsmaßstab entsprechend obiger Maßgabe in einem Abstand $\Delta a = [(m \cdot p) \pm (p/n)] \cdot (I_b/I_a)$. Die Lage der durch die Spalte nach Fig. 2 erzeugten Spektren auf dem Zeilenempfänger ist in Fig. 3 beispielhaft dargestellt.

Im Beispiel wurden vier Spalte 11 gewählt, die einzeln und nacheinander aktivierbar sind. Die Möglichkeit einer Erhöhung der Spaltzahl, die jedoch zu keiner wesentlichen weiteren Verbesserung der Ortsauflösung führt, ist in den Figuren 2 und 3 durch entsprechende Unterbrechungen der Spaltblende 10 und des Zeilenempfängers 3 angedeutet.

Für eine Breite der Spalte 11 in der Spaltblende 10 von 30 μm, einer Pixelbreite der Einzelelemente des Zeilenempfängers von 25 μm, und der gewählten Spaltzahl von vier ergibt sich nach obiger Beziehung $\Delta s$ = [(m · p) + (p/n) ein $\Delta s$ von 81,25 μm für m=3. Die Wahl der Größe m kann von Spalt zu Spalt unterschiedlich sein und stellt letztlich eine technologische Freiheit für die Herstellung der Spalte 11 in der Spaltblende 10 dar. Die gewählte Spaltzahl von vier stellt ein gewisses Optimum bzgl. Fertigung der Spaltblende 10 und der erreichbaren Ortsauflösung dar. Die Ortsauflösung wird im Vergleich des Einsatzes von nur einer Blende 11 bei vier Spalten um ca. den Faktor 3, bei sonst identischen, im Beispiel dargestellten Verhältnissen, erhöht. Bei einer solchen Leistungssteigerung lassen sich bspw. 1024 Pixel enthaltende, relativ preiswerte Empfängerzeilen im Spektrometer einsetzen.

In Figur 3 ist die Lage der erzeugten Spektren auf dem Zeilenempfänger 3 veranschaulicht. Der jeweilige Versatz der Spektren um die Größe p/n ist ersichtlich. Die Spektrenbande 7a hat in der Darstellung ihren Ursprung im Spalt 11a, die Spektrenbande 7b korrespondiert mit dem Spalt 11b, usw..

Die Spalte 11a...n werden so geschaltet, daß jeweils nur einer geöffnet ist und von diesem ausgehend auf den Zeilenempfänger 3 jeweils ein Spektrum erzeugt wird, die nach obigen Maßgaben jeweils um 81,25 μm verschoben sind. Für jede dieser Einzelstellungen wird der Zeilenempfänger 3 ausgelesen, wofür das Stell- und Signalverarbeitungsmittel 4 vorgesehen ist, von welchem aus auch die jeweiligen Schaltzustände der Spaltblende 12 angeregt werden. Anschließend werden die Spektren 7a ...7n bei der Auswertung rückverschoben und zu einem hochaufgelösten Spektrum zusammengesetzt.

Temperaturänderungen des Spektrometers können bei Verwendung von Materialien für das Spektrometergehäuse, den Gitterträger, den Zeilenempfänger und das Spaltarray mit wesentlich verschiedenen thermischen Längenausdehnungskoeffizienten im Falle von Temperaturschwankungen zu einer Verschiebung der Spektren auf dem Empfänger bzw. zu einer Änderung des Abstandes der Spektren und auch zu einer Verschlechterung des spektralen Auflösungsvermögen führen. Im Rahmen der Erfindung ist deshalb vorgesehen, daß für die erste Spaltblende 10 ein Material mit einem solchen thermischen Längenausdehnungskoeffizienten gewählt ist, daß die laterale Ausdehnung des Bildes der Spaltblende auf dem Empfängerarray bei der spezifischen Temperatur der Spaltblende der Ausdehnung des Empfängerarrays bei dessen spezifischer Temperatur entspricht.

Für das Material des Zeilenempfängers 3 ist ebenfalls ein solches ausgewählt das dem Ausdehnungskoeffizienten von Gitterträger 21 und Spektrometergehäuse 6 besitzt. Wird in dem Spektrometer eine Spaltblende 10 verwendet, die den gleichen thermischen Längenausdehnungskoeffizienten wie der Gitterträger 21, das Spektrometergehäuse 6 und der Zeilenempfänger 3 hat und der Abbildungsmaßstab ist zu 1:1 gewählt, dann wirken sich die thermischen Ausdehnungen so aus, daß die Orte der Abbildung der Einzelspalte auf den Zeilenempfänger 3 annähernd temperaturinvariant sind.

Der Zeilenempfänger 3 besteht i.a. aus Silizium mit einem thermischen Längenausdehnungskoeffizienten von ca. $2{,}3 \cdot 10^{-6}$/K. Die Spaltblende 10 ist deshalb vorzugsweise aus Silizium gefertigt, wobei übliche mikrosystemtechnische Methoden zur Einbringung der Spalte 11a...n zum Einsatz gelangen. Dabei kann die Spaltblende 10 vorzugsweise durch eine ca. 1,5 μm dicke Siliziumoxynitridmembran, mit einem gleichen thermischen Ausdehnungskoeffizienten, gebildet sein, die am äußeren Umfang von einem im Ätzverfahren verbleibenden Si-Rahmen gehaltert ist.

Bei einer derartigen Materialauswahl werden thermisch bedingte Abstandsänderungen der erfindungsgemäßen Spalte 11a...n der Spaltblende 10 keine nennenswerten Verschiebungen der von den einzelnen Spalten ausgehenden Spektren auf dem Empfänger hervorrufen.

Bezugszeichenliste

| | |
|---|---|
| 1 - | Beleuchtungsspalteinheit |
| 10 - | erste Spaltblende |
| 11a ... 11n - | Spalte der ersten Spaltblende |
| 12 - | zweite Spaltblende |

| | |
|---|---|
| 12a - | Spalt der zweiten Spaltblende |
| 2 - | Gitter |
| 21 - | Gitterträger |
| 3 - | Empfängerarray |
| 31 - | Empfängerelement |
| 4 - | Stell- und Signalverarbeitungseinheit |
| 5 - | Verschiebeeinheit |
| 6 - | Spektrometergehäuse |
| 7a ... 7n - | Spektren |
| $b_1$ - | Spaltbreite der Spalte 11a ... 11n |
| $b_2$ - | Breite des Spalts 12a |
| $\Delta a$ - | Abstand der Spektren |
| $\Delta s$ - | Mittenabstand der Spalte der ersten Spaltblende |
| p - | Pixelbreite eines Empfängerelementes |
| S - | Strahlung |

**Patentansprüche**

1. Anordnung zur Erhöhung der spektralen Ortsauflösung eines Spektrometers, im wesentlichen beinhaltend ein Empfängerarray (3), ein abbildendes dispergierendes Gitter (2) und eine Beleuchtungsspalteinheit, wobei das Empfängerarray (3), das abbildende dispergierende Gitter (2) und eine erste Spaltblende (10) der Beleuchtungsspalteinheit zueinander und zum Spektrometergehäuse (6) in eine starre Verbindung gebracht sind, die erste Spaltblende (10) mit n Spalten (11a...n) versehen ist, wobei für die Spaltanzahl gilt n ≥ 2, deren Spaltbreite ($b_1$) so gewählt ist, daß ihre Abbildung auf dem Empfängerarray (3) in der Größenordnung der Pixelbreite (p) eines einzelnen Empfängerelementes (31) erfolgt und jeweils benachbarte Spalte zueinander in einem Mittenabstand ($\Delta s$) angeordnet sind, der einer Beziehung $\Delta s = [(m \cdot p) \pm (p/n)] \cdot (I_b/I_a)$ folgt, wobei m für eine ganze Zahl ≥ 1, p für die Pixelbreite eines Empfängerelementes (31), $I_b$ für die empfängerseitige Schnittweite und $I_a$ für die spaltseitige Schnittweite stehen und dieser ersten Spaltblende (10) eine zweite, nur einen Spalt (12a) aufweisende Spaltblende (12) verschiebbar derart zugeordnet ist, daß nacheinander jeweils nur einer der Spalte (11a...n) der ersten Spaltblende (10) in einen Strahlung durchlassenden Zustand versetzbar ist und eine Stell- und Signalverarbeitungseinheit (4) vorgesehen ist, vermittels derer die jeweiligen Schaltzustände der zweiten Spaltblende (12) einstellbar und die zugehörigen Spektren vom Empfängerarray (3) abgreifbar sind.

2. Anordnung nach Anspruch 1, **dadurch gekennzeichnet, daß** die Breite ($b_2$) des Spalts (12a) der zweiten Spaltblende (12) größer festgelegt ist als die jeweilige Breite ($b_1$) der Spalte (11n) der ersten Spaltblende (10).

3. Anordnung nach Anspruch 1, **dadurch gekennzeichnet, daß** für die erste Spaltblende (10) ein Material mit einem solchen thermischen Längenausdehnungskoeffizienten gewählt ist, daß die laterale Ausdehnung des Bildes der Spaltblende auf dem Empfängerarray bei der spezifischen Temperatur der Spaltblende der Ausdehnung des Empfängerarrays bei dessen spezifischer Temperatur entspricht.

4. Anordnung nach Anspruch 3, **dadurch gekennzeichnet, daß** die erste Spaltblende (10) im wesentlichen aus Silizium gefertigt ist.

5. Anordnung nach Anspruch 4, **dadurch gekennzeichnet, daß** die erste Spaltblende (10) aus einer Siliziumoxynitridmembran besteht, die von einem rahmenförmigen Siliziumträger im äußern Umfangsbereich gehaltert ist.

6. Anordnung nach Anspruch 3, **dadurch gekennzeichnet, daß** für das Empfängerarray (3), die erste Spaltblende (10), den Gitterträger (21) und das Spektrometergehäuse (6) Materialien mit weitestgehend gleichem thermischen Längenausdehnungskoeffizienten gewählt sind.

7. Anordnung nach Anspruch 1, **dadurch gekennzeichnet, daß** der zweiten Spaltblende (12) eine diese erfassende translatorische Verschiebeeinheit (5) zugeordnet ist.

8. Anordnung nach Anspruch 7, **dadurch gekennzeichnet, daß** die Verschiebeeinheit (5) durch einen Schrittmotor und einem diesen zugeordneten Getriebe gebildet ist.

**Claims**

1. An arrangement for increasing the local spectral resolution in a spectrometer, substantially comprising a detector array (3), an imaging dispersing grating (2) and an illumination slit unit (1), said detector array (3), said imaging dispersing grating (2) and a first slit diaphragm (10) of said illumination slit unit being rigidly connected to one another and to a spectrometer housing (6), said first slit diaphragm (10) is provided with n slits (11a...n), wherein n≥2 is valid for the number of slits, the slit width ($b_1$) of which is so selected that their image upon the detector array (3) is in the order of size of the pixel width (p) of a single detector element (31), and respective adjacent slits are arranged to one another at a central distance ($\Delta s$), which is in accordance with a relation $\Delta s = [(m \cdot p) \pm (p/n)] \cdot (I_b/I_a)$, wherein m is an integer ≥ 1, p is the pixel width of a detector element (31), $I_b$ is the image (detector) side inter-

ception length, and $I_a$ is the object (slit) side interception length, and wherein a second slit diaphragm (12), which only comprises one slit (12a), is displaceably associated to said first slit diaphragm (10) in such a way that only sequentially one of the slits (11a...n) of the first slit diaphragm (10) is adapted to be positioned into a radiation passing state, and wherein a displacement and signal processing unit (4) is provided which is adapted to set the respective switching states of the second slit diaphragm (12) and to read off the corresponding spectra from the detector array (3).

2. Arrangement as claimed in claim 1, **characterized in that** the width ($b_2$) of the slit (12a) of the second slit diaphragm (12) is designed greater than the respective width ($b_1$) of the slit (11n) of the first slit diaphragm (10).

3. Arrangement as claimed in claim 1, **characterized in that** a material is provided for the first slit diaphragm (10), the thermal longitudinal expansion coefficient of which is so selected that, at the specific temperature of the slit diaphragm, the lateral extension of the image of the slit diaphragm on the detector array corresponds to the expansion of the detector array at the specific temperature of the latter.

4. Arrangement as claimed in claim 3, **characterized in that** the first slit diaphragm (10) is substantially made of silicon.

5. Arrangement as claimed in claim 4, **characterized in that** the first slit diaphragm (10) consists of a siliconoxynitride membrane, which is held by a Si-frame mount at its rim portions.

6. Arrangement as claimed in claim 3, **characterized in that** materials of substantially the same thermal longitudinal expansion coefficient have been selected for the detector array (3), the first slit diaphragm (10), the grating support (21) and the spectrometer housing (6).

7. Arrangement as claimed in claim 1, **characterized in that** a translatory displacement unit (5) is associated to the second slit diaphragm (12) including the latter.

8. Arrangement as claimed in claim 7, **characterized in that** the displacement unit (5) is comprised of a step-motor with an associated gear means.

## Revendications

1. La Configuration destinée à augmenter la résolution spectrale locale d'un spectromètre comprenant dans l'essentiel un récepteur array 3), une grille de dispersion pour la reproduction (2) et un module d'éclairage à fentes, est **caractérisée en ce que** le récepteur array (3), le diaphragme à fentes (10), et la grille à dispersion (2) sont reliés entre eux et par rapport au boîtier du spectromètre par une liaison rigide, le premier diaphragme à fente (10) étant doté de n fentes (11a ...n), le nombre de fentes étant défini suivant n ≥ 2, dont la largeur de fente bl étant choisie de sorte que la reproduction de l'image des fentes sur le récepteur array (3) soit réalisée en fonction de la largeur des pixels. (p) d'un élément récepteur individuel (31), que les fentes adjacentes sont disposées dans une distance d'entre-axes ∆s, les unes des autres, où ∆s étant égal à $[(m \cdot p) \pm (p/n) \cdot (I_b/I_a)]$, m étant le nombre entier ≥1, p la largeur d'un pixel d'un élément récepteur 31, $I_b$ la largeur de coupe côté réception et $I_a$ la largeur de coupe côté fente, que le premier diaphragme à grille est suivi d'un deuxième diaphragme (12) à une seule fente (12a) mobile permettant d'activer de manière consécutive toujours une seule des fentes (11a... n) du premier diaphragme à fentes (10) pour faire passer le rayonnement, qu'un module de réglage et de traitement de signaux (4) est prévu permettant le réglage des états d'action significatifs du deuxième diaphragme à fentes (12), la saisie des spectres correspondants sur le récepteur array (3).

2. La Configuration suivant la revendication 1 est **caractérisée en ce que** la largeur ($b_2$) de la fente (12a) du deuxième diaphragme à fentes (12) est plus grande que la largeur ($b_1$) de la fente (11n) du premier diaphragme à fentes (10).

3. La Configuration suivant la revendication 1 est **caractérisée en ce que**, pour le premier diaphragme à fentes (10), un matériau a été choisi dont le coefficient de dilatation thermique assure que la dilatation latérale de l'image du diaphragme à fentes sur le récepteur array par la température spécifique du diaphragme à fentes sera conforme à la dilatation du récepteur array, à condition toutefois que la température de celui-ci soit égale à sa température spécifique.

4. La Configuration suivant le revendication 3 est **caractérisée en ce que** le premier diaphragme à fentes (10) est réalisé essentiellement e Silicium.

5. La Configuration suivant la revendication 4 est **caractérisée en ce que** le premier diaphragme (10) est formé par une membrane en oxynitryre de silicium maintenue sur les bords par un cadre en Si.

6. Configuration suivant la revendication 3 est **caractérisée en ce que** les coefficients de dilatation thermique des matériaux utilisés pour le porte-grille (21), le boîtier du spectromètre (6) et le récepteur en ligne (3) sont presque identiques.

7. La Configuration suivant la revendication 1 est **caractérisée en ce que** le deuxième diaphragme à fente (12) est complété par un module de décalage (5) qui le saisit pour le déplacer.

8. La Configuration suivant la revendication 7 est **caractérisée en ce que** le module de décalage (5) est composé d'un moteur pas à pas et un jeu d'engrenage relié à ce module.

Fig. 1

Fig. 2

Fig. 3